# EUROPÄISCHE PATENTSCHRIFT

(11) **EP 2 640 546 B1**
(45) Veröffentlichungstag und Bekanntmachung des Hinweises auf die Patenterteilung: **02.11.2016**
(21) Anmeldenummer: 11808158.7
(22) Anmeldetag: 17.11.2011
(51) Int. Cl.: B23K 13/01, F16L 11/04, F16L 11/18, H05B 6/10, H05B 6/42

(54) **VORRICHTUNG UND VERFAHREN ZUM INDUKTIVEN ERWÄRMEN METALLISCHER BAUTEILE BEIM SCHWEISSEN UNTER VERWENDUNG EINES FLEXIBLEN GEKÜHLTEN INDUKTIONSELEMENTES**
DEVICE AND METHOD FOR INDUCTIVELY HEATING METAL COMPONENTS DURING WELDING, USING A COOLED FLEXIBLE INDUCTION ELEMENT
DISPOSITIF ET PROCÉDÉ DE CHAUFFAGE INDUCTIF DE COMPOSANTS MÉTALLIQUES LORS DU SOUDAGE À L'AIDE D'UN ÉLÉMENT INDUCTIF FLEXIBLE REFROIDI

(30) Priorität: 19.11.2010 DE 102010060690
(43) Veröffentlichungstag der Anmeldung: 25.09.2013
(73) Patentinhaber: Nebelung, Andreas, 45355 Essen (DE)
(72) Erfinder: Nebelung, Andreas, 45355 Essen (DE)
(74) Vertreter: CBDL Patentanwälte
(86) Internationale Anmeldenummer: PCT/DE2011/075278
(87) Internationale Veröffentlichungsnummer: WO 2012/065608

(56) Entgegenhaltungen:
- GB-A- 776 924
- JP-A- 2007 063 642
- JP-A- 2008 097 948
- US-A- 2 457 843
- US-A- 5 215 338
- US-A1- 2001 052 520
- US-A1- 2005 092 738
- DATABASE WPI Week 199218 Thomson Scientific, London, GB; AN 1992-148580 XP002674203, -& SU 1 663 790 A (UFA AVIATION INST) 15. Juli 1991 (1991-07-15)

## Beschreibung

Die Erfindung betrifft eine Vorrichtung und ein Verfahren zum induktiven Erwärmen metallischer Bauteile entsprechend dem Oberbegriff der Ansprüche 1 und 10 (siehe z.B. US2001/0052520 A1), insbesondere beim Schweißen.

### HINTERGRUND DER ERFINDUNG

Bei bestimmten Schweißvorgängen ist es notwendig, die miteinander zu verbindenden Bauteile vorzuwärmen bzw. nach einem Schweißgang auf einer bestimmten Temperatur zu halten. Durch Vorwärmen der Bauteile kann (materialabhängig) eine sog. Aufhärtung (Bildung sehr harter Gefügezonen durch Überschreitung bestimmter Kohlenstoffwerte in der beim Schweißen wärmebeeinflußten Zone) verhindert werden. Bei mehrlagigem Schweißen ist die sog. Zwischenlagentemperatur von Bedeutung, die nicht unter einen bestimmten Wert fallen sollte, um sog. Kaltrisse zu vermeiden. Bei bestimmten Prozessen sollen die Bauteile nach dem eigentlichen Schweißvorgang für eine bestimmte Zeit auf einer bestimmten Temperatur gehalten (geglüht) werden. In allen diesen Fällen müssen die Bauteile durch geeignete Mittel zusätzlich zum eigentlichen Schweißvorgang erwärmt werden.

Bei einem bekannten und häufig verwendeten Verfahren werden ein oder mehrere Gasbrenner einer Schweißvorrichtung vorgeschaltet, an denen die Bauteile dann vorbeigeführt werden, um den Schweißnahtbereich der zu schweißenden Bauteile vorzuwärmen. Je nach Anordnung und Ausrichtung der Brenner, Material und Form der Bauteile und Geschwindigkeit, mit der sich Bauteile und Brenner relativ zueinander bewegen, ist die Erwärmung der Bauteile sehr ungleichmäßig, was negative Auswirkungen auf den Werkstoff der Bauteile haben kann. Beispielsweise toleriert der Stahl 15 NiCuMoNb 5 - WB 36 (Werkstoffnummer 1.6368), der in der Kesselindustrie sehr oft eingesetzt wird, nur sehr niedrige Auf- und Abkühlraten und sollte daher nicht mit einer Flamme vorgewärmt werden.

Neben der sog. Flammenvorwärmung ist die Vorwärmung mittels Infrarotstrahlung bekannt, womit Temperaturspitzen in den Bauteilen vermieden werden sollen. Dieses Verfahren ist allerdings ebenso wie die Erwärmung mit Flammen sehr energieintensiv und mit Energieverlusten im Bereich von 70 % verbunden. Zudem ist mittels Infrarotstrahlung oft nur eine oberflächliche Erwärmung der Bauteile möglich, während gerade bei Bauteilen mit einer großen Dicke eine Erwärmung des gesamten Schweißnahtbereichs wünschenswert ist.

In den letzten Jahren werden Bauteile deshalb verstärkt mittels Induktion erwärmt. Dabei werden im Schweißnahtbereich vor einer eigentlichen Schweißvorrichtung mittels einer als Induktor bezeichneten Vorrichtung Wirbelströme in den Bauteilen induziert, die zur Widerstandserwärmung führen. Je nach Induktorgeometrie, Schweißnahtgeometrie und Induktorleistung kann der gesamte Schweißnahtbereich vorgewärmt werden. Dabei kann zwischen zwei grundsätzlich verschiedenen Induktorbauarten, nämlichen starren und schlaffen, unterschieden werden, die sich jeweils für bestimmte Anwendungsarten durchaus bewährt haben. Daneben kann zwischen Induktoren, die aktiv über fluide Kühlmittel gekühlt werden und über entsprechende Kühlmittelleitungen verfügen, und solchen, die nicht über Kühlmittelleitungen verfügen, unterschieden werden.

Aus der DE 100 47 492 A1 sind verschiedene starre Induktoren bekannt, die nicht über Kühlmittelleitungen verfügen und zur schnellen lokalen Aufheizung bestimmt sind. Die Induktoren sind spezifisch für bestimmte Schweißnahtformen (z.B. Kehlnaht, Stumpfnaht), Schweißverfahren und Bauteile gefertigt und dienen dazu, die Schweißgeschwindigkeit dadurch drastisch zu erhöhen, daß die Bauteile kurz (typischerweise etwa 100 mm) vor dem Schweißbrenner sehr schnell induktiv erwärmt werden. Dazu werden die Induktoren sehr dicht über den Bauteilen plaziert. Für Stähle wird eine Arbeitshöhe, also ein Abstand zwischen Induktor und Bauteil, von 1 bis 2 mm, für Aluminium-Legierungen sogar von vorzugsweise weniger als 1 mm genannt. Entsprechende Induktoren arbeiten mit einer Induktorleistung von etwa 15 bis 30 kW, und es werden Wechselstromfelder im Frequenzbereich von ca. 9 bis 23 kHz induziert. Damit sind dann Schweißgeschwindigkeiten von 400 bis 1.200 mm/Minute erreichbar.

Wenngleich sich die aus der genannten DE 100 47 492 A1 bekannten speziellen starren Induktoren durchaus bewährt haben, sind sie doch für Anwendungen z.B. im Anlagenbau, wo sehr große und in der Regel individuell gefertigte Bauteile, z.B. Rohre mit Durchmessern im Bereich mehrerer Meter, aus Spezialstählen wie hochlegierten CrNi-Stählen und Feinkornstählen, miteinander verschweißt werden müssen, aus mehreren Gründen nicht einsetzbar. So vertragen diese Bauteile weder die in der DE 100 47 492 A1 beschriebene schnelle Aufheizung, noch die dabei gewünschte örtlich stark begrenzte Aufheizung. Da die Induktoren starr sind, werden sie bauteilspezifisch gefertigt. Da im Anlagenbau regelmäßig individuell gefertigte Bauteile verwendet werden, müßten jeweils spezielle Induktoren gefertigt werden, was die Kosten erheblich erhöht. Im Anlagenbau wird zudem üblicherweise so vorgegangen, daß die miteinander zu verschweißenden großen Rohre um ihre Längsachse drehbar gelagert werden und dann langsam um die Längachse rotierend an einer Schweißeinrichtung vorbeilaufen. Der nach der Lehre der DE 100 47 492 einzuhaltende geringe Abstand zwischen Induktor und den zu erwärmenden Bauteilen erforderte eine Präzision bei Lagerung und Rotation, die im Anlagenbau typischen Bauteilen, wenn überhaupt, nur mit unverhältnismäßig großem Aufwand einzuhalten ist. Da die Induktoren nicht aktiv gekühlt und im Betrieb sehr heiß werden, sind sie für die langsame, teilweise über Stunden erfolgende langsame Erwärmung großer Bauteile nicht geeignet.

Induktoren der anderen Bauart, sogenannte schlaffe, band- oder schlauchförmige Induktoren sind z.B. aus der US 2007/0215606 oder der US 2,457,843 bekannt. Sie bestehen aus einem vorzugsweise verseilten Induktionsdraht oder einer Induktionslitze, die mit einem Schlauch umgeben ist, durch den dem Kühlflüssigkeit geleitet werden kann. Sie werden auf einem zu erwärmenden Bauteil z.B. spiralförmig ausgelegt oder in mehreren Windungen um das Bauteil herumgewickelt und haben sich in der Praxis für bestimmte Anwendungen, zum Beispiel dem Vorwärmen und Gußformen, durchaus bewährt. Solche Induktoren eignen sich aber für den Einsatz beim Schweißen von großen rotierenden Bauteilen, insbesondere Rohren beim Anlagenbau, nicht, da sie bauartbedingt immer auf den Bauteilen aufliegen und bei entsprechender Rotation der Bauteile durch Reibung mitgeführt werden, dann in die Schweißzone gelangen oder aber sich verheddern und zerrissen werden. Statt einer schlaffen Litze könnte zwar theoretisch auch ein starrer Draht verwendet werden, dieser ist jedoch entweder nicht in der Lage, die beim Schweißen großer Bauteile benötigte Leistung zu übertragen, oder, wenn ein Draht mit entsprechend großem Durchmesser verwendet würde, bei Anlegen eines Wechselstromfeldes der benötigten Stärke sog. Skineffekte aufträten, die den Widerstand eines solchen Induktors drastisch erhöhten und damit dessen Funktionsweise verschlechterten.

Die JP 2007/063642 A lehrt eine Induktionsvorrichtung zum Glühen des Bauteils nach dem Schweißen, die über Bolzen an dem Bauteil befestigt wird.

Aus der US 2001/0052520 A1 und der US 2005/0092738 A1 sind Induktionselemente bekannt, um das Aushärten von gebondeten Elementen zu beschleunigen bzw. zu ermöglichen.

Beim Schweißen großer rotierender Bauteile, wie insbesondere von Rohren mit Durchmessern im Meterbereich, wird daher immer noch so vorgegangen, daß die Bauteile mit offenen Flammen oder Infrarotlampen erwärmt werden, obwohl dies mit hohen Energieverlusten, ungleichmäßiger Durchwärmung und ggf. ungewünschten Temperaturspitzen verbunden ist.

### OFFENBARUNG DER ERFINDUNG

Der Erfindung liegt die Aufgabe zugrunde, eine Vorrichtung und ein Verfahren zum Erwärmen von metallischen Bauteilen anzugeben, die es Erlauben, die Vorteile induktiver Erwärmung auch bei großen sich bewegenden Bauteilen kostengünstig zu nutzen, ohne daß dazu bauteilspezifische Induktoren gefertigt werden müßten, und die zudem auch eine langsame, teilweise über Stunden erfolgende Erwärmung ermöglichen .

Die Aufgabe wird gelöst von einer Vorrichtung mit den Merkmalen des Anspruchs 1 und einem Verfahren mit den Merkmalen des Anspruchs 10.

Vorteilhafte Ausgestaltungen und Durchführungsformen sind Gegenstand der Unteransprüche.
Die Erfindung beruht auf der überraschenden Erkenntnis, daß es möglich ist, eine zur Übertragung der für die Erwärmung der jeweiligen Bauteile erforderlichen

Induktionsleistung geeignete Vorrichtung, nachfolgend auch Induktor genannt, mit einem flexiblen Induktionselement und einer flexiblen Kühlmittelleitung für ein Kühlmittel zum Kühlen des Induktionselementes zu schaffen, bei der das Induktionselement und die Kühlmittelleitung nicht nur mehrfach plastisch oder elastisch verformbar und manuell oder automatisch an die Form zu erwärmender Bauteil so angepaßt werden können, daß zwischen ihnen und den zu erwärmenden Bauteilen ein Abstand verbleibt, der es ermöglicht, daß sich die Bauteile bewegen, insbesondere drehen, ohne mit dem Induktor in Kontakt zu kommen, sondern wobei das Induktionselement und die Kühlmittelleitung zudem auch so ausgebildet sind, daß sie die gewünschte Form während des Betriebs des Induktors selbsttragend beibehalten. Dabei hier wird unter dem Begriff "selbsttragend" verstanden, daß das Induktionselement und die Kühlmittelleitung in der Lage sind, wenn sie an die Form eines zu erwärmenden Bauteils angepaßt worden ist, diese Form ohne zusätzliche Bauteile wie Stützen, Tragelemente, Aufhängungen etc. zumindest während des Betriebs des Induktors beizubehalten, ohne sich an dem Bauteil abzustützen. Nach dem Betrieb des Induktors können das Induktionselement und die Kühlmittelleitung an die Form anderer Bauteile, typischerweise an andere Rohrdurchmesser angepaßt werden. Dabei stehen verschiedene Möglichkeiten zur Verfügung, Induktionselement und Kühlmittelleitung in der beschriebenen Weise auszubilden, die in den Unteransprüchen definiert und nachfolgend detailliert beschrieben sind.

Weitere Einzelheiten und Vorteile der Erfindung ergeben sich aus der nachfolgenden rein beispielhaften und nicht-beschränkenden Beschreibung dreier Ausführungsbeispiele in Verbindung mit der Zeichnung.

### KURZE BESCHREIBUNG DER ZEICHNUNG

- Fig. 1: zeigt eine Schnittansicht entlang der Achse eines rohrförmigen Induktionselementes, das gleichzeitig auch als Kühlmittelleitung fungiert, gemäß einem ersten Ausführungsbeispiels der Erfindung.
- Fig. 2: zeigt stark schematisiert das erste Ausführungsbeispiel der Erfindung bei der Verwendung.
- Fig. 3: zeigt eine Schnittansicht entlang der Achse einer Kühlmittelleitung mit angesetztem Induktionselement gemäß einem zweiten Ausführungsbeispiel der Erfindung.
- Fig. 4: zeigt stark schematisiert das zweite Ausführungsbeispiel der Erfindung bei der Verwendung.
- Fig. 5: zeigt schematisch eine bei einem dritten Ausführungsbeispiel der Erfindung vorgesehene Einheit aus Kühlmittelleitung und Induktionselement.
- Fig. 6: zeigt ein bei dem dritten Ausführungsbeispiel verwendetes Steckelement.

### BESCHREIBUNG BEVORZUGTER AUSFÜHRUNGSFORMEN

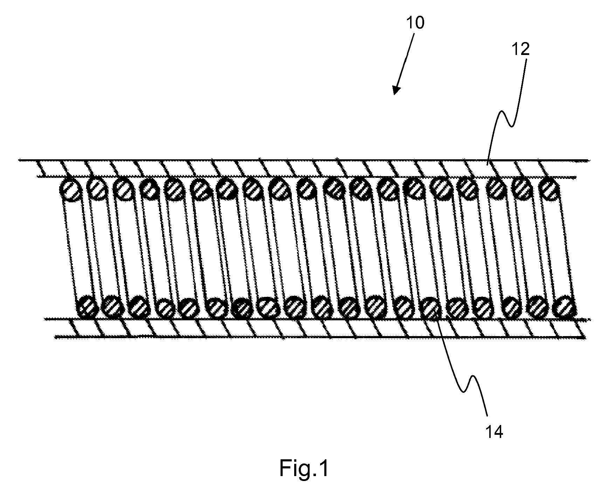

In der Fig. 1 ist eine erste in ihrer Gesamtheit mit 10 bezeichnete Ausführungsform einer erfindungsgemäßen Vorrichtung zum induktiven Erwärmen von metallischen Bauteilen gezeigt, die ein Induktionselement 12 in Form eines Rohrs und eine Schraubenfeder 14 umfaßt. Das Induktionselement 12 ist aus einem Material wie z.B. Aluminium oder Kupfer gefertigt und so dünnwandig ausgebildet, daß es manuell in gewissem Maße verbogen, insbesondere an unterschiedliche Rohrdurchmesser zu verschweißender Rohre angepaßt werden kann, wobei im Inneren des Induktionselement 12 die Schraubenfeder 14 so angeordnet, daß sie an der inneren Wand des Induktionselementes eng anliegt und als Knickschutz für das Induktionselement fungiert.

Die Schraubenfeder 14 ist aus einem Nichteisenmetall, vorzugsweise aus Bronze, Messing oder Edelstahl gefertigt, so daß in ihr keine Wirbelströme induziert werden können.

Das Induktionselement 12 weist typischerweise einen Durchmesser von etwa 5 bis 70 mm mit einer Wandstärke von 0,5 bis 5 mm auf und erfüllt eine Doppelfunktion: es dient sowohl als Induktionselement als auch als Kühlmittelleitung zum Leiten einer das Induktionselement kühlenden Kühlflüssigkeit. Induktionselement und Kühlmittelleitung sind also bei diesem Ausführungsbeispiel integral ausgebildet. Im Betrieb wird das Induktionselement mit einer Pumpe zum Fördern von Kühlflüssigkeit durch das Induktionselement und einem Mittelfrequenzgenerator verbunden, wobei der Mittelfrequenzgenerator Wechselstrom mit einer Frequenz im Bereich von etwa 1 kHz bis 30 kHz, bevorzugt 1 bis 16 kHz, und einer Leistung von etwa 1 bis 200 kW erzeugt. Die niedrigen Frequenzen haben sich zum langsamen Aufheizen großer Bauteile besonders bewährt. Typische Aufheizraten liegen bei 100 °C bis 400 °C pro Stunde und darunter. Bei bestimmten Stählen kann es erforderlich sein, die daraus gefertigten Bauteile wird noch geringen Raten, z.B. 50 °C pro Stunde zu erwärmen bzw. abkühlen zu lassen, was mit der erfindungsgemäßen Vorrichtung problemlos möglich ist.

Die Anordnung der Schraubenfeder 14 erlaubt es, das Induktionselement 12 an die Form zu erwärmender Bauteile anzupassen, ohne das Induktionselement 12 dabei zu knicken. Gleichzeitig erlaubt es die Schraubenfeder, das Induktionselement 12 mit relativ geringen Wandstärken und damit einem relativ geringen Gewicht auszubilden, so daß die Einheit von Induktionselement und Schraubenfeder selbst dann die angenommene Form beibehalten kann, wenn Kühlmittel das Induktionselement durchströmt, ohne daß das dann um das Kühlmittelgewicht erschwerte Induktionselement unter Schwerkrafteinwirkung verformt wird.

Die gezeigte Ausführungsform der Erfindung eignet sich sowohl zur Vorerwärmung vor dem Schweißen, zur ergänzenden Erwärmung beim Schweißen sowie zum kontrollierten langsamen Abkühlenlassen und zur Wärmebehandlung einschließlich des Glühens nach dem Schweißen von Bauteilen, die in sog. Drehvorrichtungen geschweißt werden. Unter dem Begriff Drehvorrichtung werden dabei sowohl Vorrichtungen verstanden, in denen die Bauteile während des Erwärmens gedreht und an einem stationären Induktor vorbeigeführt werden, als auch Vorrichtungen, bei denen sich die Bauteile nicht bewegen und der Induktor um die Bauteile herum oder in den Bauteilen bewegt wird.

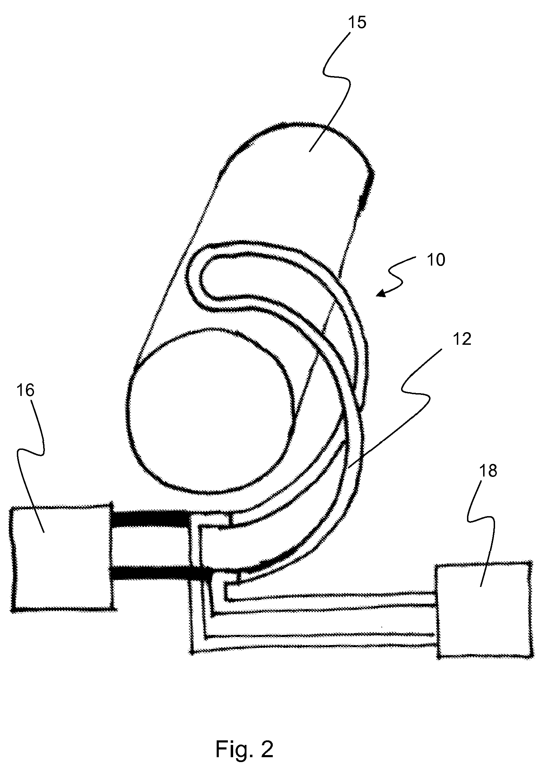

Bei der Verwendung einer Vorrichtung gemäß Fig. 1 wird zunächst das Induktionselement, das bei diesem Ausführungsbeispiel lediglich eine sog. Windung umfaßt, also einmal um 180° umgelenkt ist, an die Form der zu schweißenden Bauteile so angepaßt, daß zwischen den Bauteilen und dem Rohr 12 ein Abstand von etwa 10 bis 30 mm verbleibt, so daß sich Bauteil und Induktionselement mit gewissem Spiel relativ zueinander bewegen können. In Fig. 2 ist stark schematisiert der Zustand nach dieser Anpassung gezeigt, wobei aus Gründen der Übersichtlichkeit nur ein Bauteil 15 gezeigt ist. Im gezeigten Fall handelt es sich bei dem Bauteil 15 um ein Rohr. Die Anpassung des Induktionselementes an die Form des Bauteils 15 kann am Bauteil selbst z.B. unter Verwendung von Abstandshaltern erfolgen.

Durch geeignete Auswahl der Wandstärke des Induktionselements 12 und der Eigenschaften der Schraubenfeder 14 (Anzahl Windungen pro Längeneinheit, Durchmesser des Federdrahtes und Material der Schraubenfeder), kann die aufzuwendende Kraft zum Anpassen der Form des Induktionselementes eingestellt werden.

Nach der Anpassung des Induktionselementes an die Form eines Bauteils wird es so positioniert, daß es sich in der Nähe des zu erwärmenden Bauteils befindet und die Erzeugung von Induktionsströmen in dem Bauteil möglich ist. Je nach Schweißgeschwindigkeit, Schweißart, Form der Schweißnaht, Material der Bauteile usw. werden der optimale Frequenzbereich sowie die Leistung eines Mittelfrequenzgenerators 16 eingestellt, der elektrisch mit dem Induktionselement 12 verbunden ist. Beim Einschalten des Mittelfrequenzgenerators 16 werden dann Wirbelströme in dem Bauteil induziert, die zu einer Erwärmung des Bauteils führen.

Bei einer bevorzugten Ausführungsform der Erfindung sind Mittel zum automatischen Steuern und Regeln der Leistung und ggf. der Frequenz des Mittelfrequenzgenerators vorgesehen, wobei diese Mittel einen oder mehrere Sensoren zur insbesondere berührungslosen Erfassung der Temperatur der Bauteile und eine entsprechende Steuer- und Regeleinheit umfassen, die in Abhängig der von dem oder den Temperatursensor/en erfaßten Temperatur den Mittelfrequenzgenerator so betreibt, daß sich in den Bauteilen der gewünschte zeitliche Temperaturverlauf ergibt.

Die Pumpe 18, die mit einem nicht gezeigten Wärmetauscher verbunden sein kann, gewährleistet, daß das Induktionselement 12 im Betrieb von Kühlflüssigkeit durchströmt und dadurch vor Überhitzung geschützt wird.

Die Vorrichtung 10 kann so angeordnet sein, daß sie, ggf. zusammen mit einer Schweißvorrichtung, stationär betrieben wird und die zu erwärmenden und ggf. zu schweißenden Bauteile an ihr vorbeigeführt werden. Die Vorrichtung 10 kann aber auch, wiederum ggf. zusammen mit einer Schweißvorrichtung, entlang der oder um die Bauteile oder in den Bauteile bewegt werden. Handelt es sich bei den Bauteilen um miteinander zu verschweißende große Rohre, kann vorteilhaft auch so vorgegangen werden, daß der Induktor innerhalb der Rohre, eine Schweißvorrichtung außerhalb der Rohre angeordnet wird, so daß die Rohre vorteilhaft als Abschirmung für die vom Induktor erzeugten starken elektromagnetischen Felder dienen.

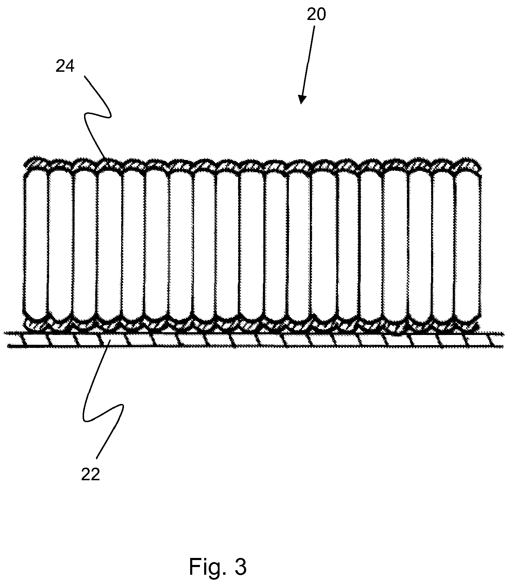

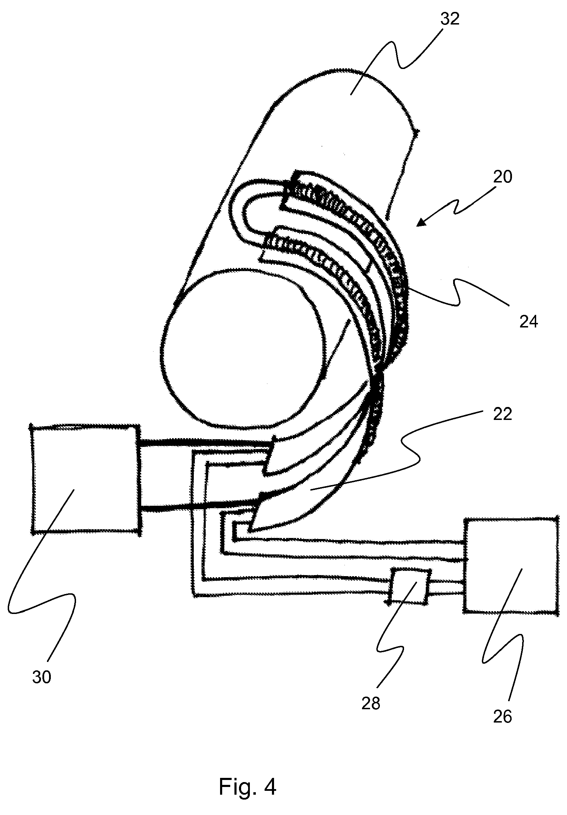

In den Fig. 3 und 4 ist eine zweite, in ihrer Gesamtheit mit 20 bezeichnete Ausführungsform einer erfindungsgemäßen Vorrichtung zum induktiven Erwärmen von metallischen Bauteilen gezeigt, die bei diesem Ausführungsbeispiel zwei Induktionsplatten 22 und ein flexibles Wellrohr 24 mit einer Windung (einer Umlenkung um 180°) umfaßt.

Das Wellrohr 24 ist vorzugsweise aus einem Nichteisenmetall wie Bronze, Messing oder Edelstahl gefertigt und an den vorzugsweise aus Kupfer oder Aluminium gefertigten, streifenartigen Induktionsplatten 22 befestigt.

Die Induktionsplatten 22 dienen als Induktionselemente und das Wellrohr 24 als Kühlmittelleitung für ein Kühlmittel zum Kühlen der Induktionselemente, wobei im Betrieb der Vorrichtung eine Kühlflüssigkeit durch das Wellrohr 24 geleitet wird. Dazu ist die erfindungsgemäße Vorrichtung im Betrieb mit einer Pumpe 26 zum Fördern der Kühlflüssigkeit durch das Wellrohr 24, einem Druckregler 28 zum Regeln des im Inneren des Wellrohres 24 herrschenden Drucks und einem Mittelfrequenzgenerator 30 verbunden.

Das Wellrohr 24 ist nicht nur flexibel, sondern kann sich in Abhängigkeit von dem in seinem Inneren herrschenden Druck ausdehnen. Jede der bei diesem Ausführungsbeispiel langgestreckten Induktionsplatten 22 ist an zwei gegenüberliegenden Endbereichen mit dem Wellrohr 24 derart verbunden, daß sich das Wellrohr nicht gegenüber der jeweiligen Platte verschieben kann. Zwischen diesen beiden Bereichen kann das Wellrohr, je nach Länge der Platten, z.B. durch an den Platten angelötete Laschen geführt sein, die eine Verschiebung der jeweiligen Platte relativ zum Wellrohr in gewissem Maße erlauben, die aber verhindern, daß sich das Wellrohr von der Platte abheben kann. Anstelle von Laschen können auch Clipse oder dergleichen verwendet werden.

Beim Erhöhen des Drucks des Kühlmittels im Inneren des Wellrohres 24 dehnt sich das Wellrohr aus und biegt dabei wie in Fig. 4 gezeigt die Induktionsplatten 22, so daß durch Einstellen des Drucks des Kühlmittels die Einheit aus Induktionsplatten und Wellrohr an die Form der zu erwärmenden Bauteile angepaßt werden kann.

Das Wellrohr 24 besitzt typischerweise einen Durchmesser von 5 bis 70 mm und eine Wandstärke von 1 bis 7 mm. Jede Induktionsplatte weist typischerweise eine Stärke von 0,5 bis 5 mm auf und ist zwischen 30 und 150 mm breit. Der Mittelfrequenzgenerator 30 erzeugt typischerweise eine Frequenz im Bereich von ca. 1 bis 30 kHz, vorzugsweise etwa 1 bis 16 kHz, und die Induktorleistung liegt typischerweise im Bereich von 1 bis 200 kW.

Wie in Fig. 4 dargestellt, sind bei dem gezeigten Beispiel zwei Induktionsplatten 22 vorgesehen, die an einem gemeinsamen Wellrohr 24 befestigt und durch Einstellen des Drucks im Wellrohr an die Form der zu erwärmenden Bauteile 32, von denen in Fig. 4 nur eines gezeigt ist, angepaßt werden. Dabei behalten die Induktionsplatten und das Wellrohr im Betrieb ihre Form selbsttragend bei, solange im Inneren des Wellrohres 24 der jeweils benötigte Druck herrscht.

Je nach Anwendungsbereich können an Stelle der dargestellten zwei Induktionsplatten auch mehrere Platten an einem Wellrohr befestigt oder einzelne Wellrohre mit jeweils einer daran befestigten Induktionsplatte über entsprechende Verbindungsstücke miteinander zur Bildung einer Induktionsschleife verbunden werden.

Bei Verwendung der Vorrichtung 20 wird die Pumpe 26 eingeschaltet und der Druck der Kühlflüssigkeit mittels des Druckreglers 28 so eingestellt, daß die Induktionsplatten und die Kühlmitteleitung die gewünschte Krümmung annehmen. Die Induktionsplatten werden typischerweise in einem Abstand zwischen etwa 10 bis 30 mm zur Oberfläche der zu erwärmenden Bauteile derart positioniert, daß sich der zu erwärmende Bereich in der Nähe der Induktionsplatten 22 befindet und Wirbelströme in den Bauteilen erzeugt werden können. Dann werden je nach Schweißgeschwindigkeit, Schweißart, Form der Schweißnaht, Material der Bauteile usw. der Frequenzbereich und die Leistung des Mittelfrequenzgenerators eingestellt, wobei vorteilhaft Mittel zum automatischen Steuern und Regeln der Leistung und ggf. der Frequenz des Mittelfrequenzgenerators vorgesehen sein können, die einen oder mehrere Sensoren zur insbesondere berührungslosen Erfassung der Temperatur der Bauteile und eine entsprechende Steuer- und Regeleinheit umfassen, die in Abhängig der von dem oder den Temperatursensor/en erfaßten Temperatur/en den Mittelfrequenzgenerator so betreibt, daß sich in den Bauteilen der gewünschte zeitliche Temperaturverlauf ergibt.

Wie die Vorrichtung 10 kann auch die Vorrichtung 20 sowohl zum stationären Betrieb ausgebildet sein, in welchem die zu erwärmenden Bauteile an der Vorrichtung vorbeibewegt werden, als auch dazu, um die bzw. entlang der Bauteile oder in den Bauteilen bewegt zu werden.

Die in den Fig. 3 und 4 stark schematisiert gezeigte Ausführungsform eignet sich insbesondere für die Erwärmung von Bauteilen mit rundem Querschnitt in Drehvorrichtungen, da die Einheit aus Wellrohr und Induktionsplatten besonders einfach und schnell an den Durchmesser der zu erwärmenden Bauteile angepaßt werden kann.

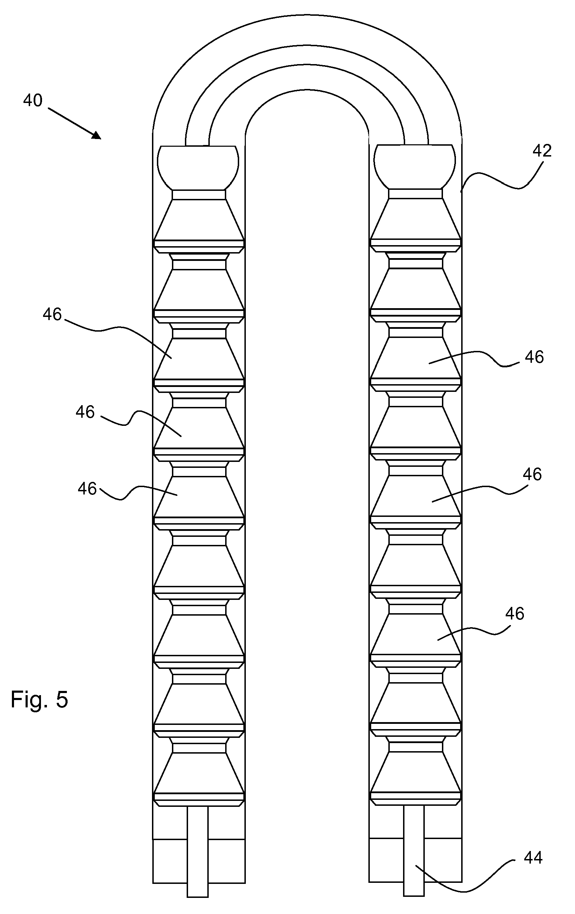

Eine derzeit besonders bevorzugte Ausführungsform der Erfindung ist Fig. 5 stark schematisiert gezeigt. Bei der in ihrer Gesamtheit mit 40 bezeichneten Vorrichtung zum induktiven Erwärmen metallischer Bauteile verläuft in einem hier durchsichtig gezeigten Schlauch 42 eine Induktionslitze 44, auch Hochfrequenz- oder kurz HF-Litze genannt, bei der es sich um eine zur Vermeidung von Skineffekten aufwendig verseilte Litze aus etwa 500 bis 2.000, vorzugsweise etwa 1.400 bis 1.500 einzeln lackisolierten Adern handelt und die typischerweise für die hier in Frage stehenden Anwendungen mit Induktionsströmen mit Frequenzen zwischen etwa 1 und 16 kHz und Induktorleistungen von etwa 1 bis 200 kW eine effektive (leitende) Querschnittsfläche (ohne die Lackisolierung) in der Größenordnung von etwa 40 bis 50 mm² besitzt. Es ist auch möglich, zur mehrere solcher Litzen parallel zu betreiben.

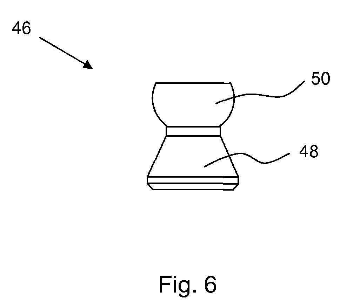

Die Induktionslitze wird durch zwei aus jeweils einer Vielzahl von hier undurchsichtig gezeichneten Steckelementen 46 gebildete Arme geführt, wobei die Steckelemente 46, von denen aus Gründen der Übersichtlichkeit nur einige mit Bezugszeichen versehen sind, in den Schlauch 42 eingeführt sind. Die Fig. 6 zeigt ein einzelnes Steckelement 46.

Wie in Fig. 6 dargestellt, besitzen die Steckelemente jeweils einen kegelstumpfförmigen Aufnahmeabschnitt 48 und einen kugelartigen Einsteckabschnitt 50, die innen jeweils hohl sind, so daß eine Flüssigkeit oder eben eine entsprechend bemaßte HF-Litze durch die Steckelemente hindurchgeführt werden können. Der Aufnahmeabschnitt 48 ist innen und der kugelartige Einsteckabschnitt 50 außen derart bemaßt und ausgebildet, daß der Einsteckabschnitt 50 eines Steckelementes 46 in den Aufnahmeabschnitt 48 eines gleichartigen Steckelementes 46 eingesteckt und dort kraftschlüssig gehalten werden kann, so daß die Elemente im inneren eine an sich flüssigkeitsdichte Leitung bilden, die Elemente aber unter Krafteinwirkung in Maßen relativ zueinander bewegt werden können und die Stellung, in die sie gebracht wurden, dann beibehalten, sofern nicht sie nicht wieder mit Kraft in andere Relativpositionen gebracht werden.

Mit diesen Steckelementen, die in der Regel aus Kunststoff spritzgegossen werden, lassen sich auch längere verformbare Arme bilden, die dann die Litze führen, so daß die Einheit Arm/Litze ein im Sinne der Erfindung mehrfach an Formen zu schweißender Bauteile anpaßbares flexibles Induktionselement bildet, das eine angenommene Form selbsttragend beibehalten kann.

Bei dem in Fig. 5 gezeigten Schlauch 42 handelt es sich vorzugsweise um einen Silikonschlauch, der mit einer gewebten Kevlarummantelung versehen ist. Typische Bemaßungen sind: Schlauchdurchmesser 20 bis 30 mm, vorzugsweise etwa 25 mm, Wandstärke des Schlauches 1,5 bis 2,5 mm, vorzugsweise etwa 2 mm, Dicke der Kevlarummantelung 0,1 mm. Die Kevlarummantelung erfüllt vorteilhaft mehrere Funktionen: sie erhöht die Druckfestigkeit des Schlauches, schützt diesen gegen äußere Beschädigungen und begrenzt die Biegsamkeit des Schlauches, so daß dieser nicht soweit gebogen werden kann, daß die ineinander gesteckten Steckelemente 46 auseinander herausgezogen werden.

Im Bereich der Schlauchumlenkung, also des in Fig. 5 in der Zeichnung oberen Bereichs zwischen den beiden aus den Steckelementen gebildeten Armen, kann ein z.B. U-förmiges Verbindungsstück vorgesehen sein, das die beiden oberen Enden der Arme miteinander verbindet und die Stabilität der gesamten Einheit erhöht. Ein solches Verbindungsstück kann aus Kunststoff gefertigt sein und die HF-Litze 44 in sich aufnehmen. Es kann aber auch aus einem Kupferrohr gebogen sein, wobei dann jedoch zur Vermeidung eines unnötigen Leistungsverlustes die Litze nicht durch das Kupferrohr geführt, sondern durchtrennt und im Bereich desjenigen Endes jedes Armes aus Steckelementen, das am Kupferrohr liegt, an das Kupferrohr angelötet sein sollte. Andernfalls würde nämlich die Litze im Bereich des Kupferrohres dieses unnötig erwärmen.

Nicht in Fig. 5 gezeigt sind die zum Betreiben der Vorrichtung benötigten und im Zusammenhang mit den Fig. 2 und 4 bereits beschriebenen Elemente wie Kühlmittelpumpe und Mittelfrequenzgenerator. Die Steckelemente bilden, bei diesem Ausführungsbeispiel gemeinsam mit dem Schlauch, eine im Sinne der Erfindung flexible Kühlmittelleitung und sind gemeinsam mit dem Schlauch an eine entsprechende Pumpe angeschlossen. Um diesen Anschluß zu erleichtern, kann vorteilhaft vorgesehen sein, daß nur die Steckelemente, die an sich eine flüssigkeitsdichte Leitung bilden, an die Pumpe angeschlossen und einige oder alle Steckelemente mit Bohrungen versehen werden, so daß Kühlmittel über die Steckelemente in den Schlauch, der an seinen beiden Enden abgedichtet ist, gelangen und diesen wieder verlassen kann.

Alle gezeigten Ausführungsbeispiele eignen sich besonders zum Erwärmen großer, zur Wärmebehandlung und zum Schweißen üblicherweise temporär um ihre Längsachse drehbar gelagerter großer Rohre, die berührungslos induktiv erwärmt werden können. Dabei erlaubt es die Erfindung erstmals, vorteilhaft kostengünstig auch Rohre mit Durchmessern im Bereich mehrerer Meter induktiv zu erwärmen, während solche Rohre aus Kostengründen bislang immer mit offenen Flammen erwärmt wurden.

Die erfindungsgemäßen Vorrichtungen, genauer gesagt die Induktionselemente und die Kühlmitteilleitungen zum Kühlen der Induktionselemente können nicht nur, wie in Fig. 2 und 4 gezeigt, von außen an Rohre angenähert werden, sondern ab gewissen Rohrdurchmessern auch im Inneren der Rohre angeordnet werden. Dabei werden die Induktionselemente entsprechend der Erfindung so ausgelegt, daß sie etwa die Hälfte bis zwei Drittel des äußeren Umfangs der Rohre umgreifen bzw. an etwa der Hälfte bis zwei Dritteln des inneren Umfangs entlanglaufen. Letztere Anordnungsweise hat den Vorteil, daß die Rohre als Schutzschirme für die starken Induktionsfelder wirken, so daß Personen außen an den Rohren arbeiten und z.B. Schweißvorrichtungen bedienen können, ohne auf die Einhaltung besonderer Sicherheitsabstände zu den jeweiligen Induktionselementen achten zu müssen. Die Induktionselemente können dabei also so verformt werden, daß sie über etwa 180 ° bis etwa 270° kreisbogenförmig verlaufen.

Die Vorrichtungen erlauben die großflächige, gleichmäßige und kontrollierte Erwärmung auch von in Wärmebehandlungshinsicht problematischen Materialien wie z.B. hochlegierten CrNi-Stählen und Feinkornstählen, die nur langsam, z.B. mit Raten von nur etwa 50 °C bis 100 °C pro Stunde auf Temperaturen von typischerweise 100 bis 400 °C gebracht oder die nur langsam von beim Schweißen oder Glühen verwenden Temperaturen abkühlen dürfen.

Im Rahmen des Erfindungsgedankens sind zahlreiche Abwandlungen und Weiterbildungen möglich, die sich zum Beispiel auf die Anzahl und Ausgestaltung der Induktionselemente beziehen. Beispielsweise ist es möglich, die im Zusammenhang mit den Fig. 1 und 2 gezeigte Anordnung von flexiblem Rohr und an der Innenwand des Rohres anliegender Schraubenfeder quasi umzukehren und eine entsprechende Schraubenfeder an der Außenwand des Rohres vorzusehen, wobei diese dann allerdings zur Erzielung des gewünschten Knickschutzes an der Außenwand des Rohres befestigt sein muß, was bei innenliegender Anordnung nicht notwendig ist. Während bei allen der gezeigten Ausführungsbeispiele lediglich eine sog. Windung vorgesehen ist, können zur großflächigen Erwärmung mehrere Windungen nebeneinander vorgesehen sein, z.B. 5 oder 10. Werden die beschriebenen Steckelemente verwendet, so kann, da diese selbst an sich eine flüssigkeitsdichte Verbindung (einen sog. Steckschlauch) bilden, auch auf eine Ummantelung der Steckelemente verzichtet werden. Die Steckelemente bilden dann eine Kühlmittelung für die in ihnen geführte Induktionslitze. Ist dagegen eine Schlauchummantelung der Steckelemente vorgesehen, muß die Litze nicht notwendigerweise durch die Steckelemente hindurch, sondern kann an den Steckelementen entlang geführt werden. Dabei können in einem Induktionselement auch mehrere Litzen vorgesehen sein, über größere Induktionsleistungen zu übertragen.

## Patentansprüche

1. Vorrichtung (10, 20, 40) zum induktiven Erwärmen metallischer Bauteile (15, 32) beim Schweißen, umfassend
- wenigstens ein flexibles Induktionselement und
- Mittel zum automatischen Steuern und Regeln der Leistung und ggf. der Frequenz eines mit dem Induktionselement verbundenen Mittelfrequenzgenerators (16, 30), wobei diese Mittel einen oder mehrere Sensoren zur insbesondere berührungslosen Erfassung der Temperatur der Bauteile (15, 32) und eine entsprechende Steuer- und Regeleinheit umfassen, die in Abhängigkeit der von dem oder den Temperatursensor/en erfassten Temperatur den Mittelfrequenzgenerator (16, 30) betreibt,
**dadurch gekennzeichnet, dass**
- wenigstens eine flexible Kühlmittelleitung für ein Kühlmittel zum Kühlen des Induktionselementes vorgesehen ist,
- das flexible Induktionselement und die Kühlmittelleitung mehrfach plastisch oder elastisch verformbar und manuell oder automatisch an die Form zu erwärmender Bauteile (15, 32) derart anpassbar sind, dass sie ihre Form und einen Abstand zwischen ihnen und den zu erwärmenden Bauteilen (15, 32) während des Betriebs der Vorrichtung selbsttragend beibehalten können, und
- das flexible Induktionselement und die Kühlmittelleitung derart an das zu erwärmende Bauteil (15, 32) anpassbar sind, dass sie etwa die Hälfte bis zwei Drittel des äußeren Umfangs des Bauteils (15, 32) umgreifen oder an etwa der Hälfte bis zwei Drittel des inneren Umfangs des Bauteils entlanglaufen können

2. Vorrichtung (10, 20, 40) nach Anspruch 1, **dadurch gekennzeichnet, dass** das Induktionselement und die Kühlmittelleitung integral miteinander ausgebildet sind, insbesondere in Form eines elektrisch leitenden Rohres (12), durch das beim Betreiben der Vorrichtung eine Kühlflüssigkeit geleitet werden kann.

3. Vorrichtung (10, 20, 40) nach Anspruch 2, wobei das Induktionselement in Form eines elektrisch leitenden Rohres (12) ausgebildet ist, **dadurch gekennzeichnet, dass** in dem Rohr (12) eine Schraubenfeder (14) vorgesehen ist, die an der inneren Wand des Rohres anliegt.

4. Vorrichtung (10, 20, 40) nach Anspruch 2, wobei das Induktionselement in Form eines elektrisch leitenden Rohres (12) ausgebildet ist, **dadurch gekennzeichnet, dass** eine Schraubenfeder (14) vorgesehen ist, die an der äußeren Wand des Rohres anliegt.

5. Vorrichtung (10, 20, 40) nach Anspruch 1, **dadurch gekennzeichnet, dass** das flexible Induktionselement als Induktionsplatte (22) ausgebildet ist und dass die Kühlmittelleitung als auf der Induktionsplatte (22) befestigtes Wellrohr (24) ausgebildet ist.

6. Vorrichtung (10, 20, 40) nach Anspruch 1, **dadurch gekennzeichnet, dass** das flexible Induktionselement aus einer Einheit von mehreren Steckelementen (46) und einer mittels der Steckelemente (46) geführten Litze (44) gebildet wird.

7. Vorrichtung (10, 20, 40) nach Anspruch 6, **dadurch gekennzeichnet, dass** die Litze eine verseilte Litze aus 500 bis 2.000, vorzugsweise etwa 1.400 bis 1.500 einzeln isolierten Drähten ist.

8. Vorrichtung (10, 20, 40) nach Anspruch 1, **dadurch gekennzeichnet, dass** die flexible Kühlmittelleitung mittels mehrerer Steckelemente (46) gebildet wird.

9. Vorrichtung (10, 20, 40) nach einem Anspruch 6 bis 8, **dadurch gekennzeichnet, dass** die Steckelemente (46) in einem vorzugsweise ummantelten, insbesondere Kevlarummantelten Schlauch (42), insbesondere einem Silikonschlauch, geführt sind.

10. Verfahren zum induktiven Erwärmen metallischer Bauteile (15, 32) insbesondere beim Schweißen unter Verwendung einer Vorrichtung (10, 20, 40), mit einem flexiblen Induktionselement und **gekennzeichnet durch** wenigstens eine flexible Kühlmittelleitung für ein Kühlmittel zum Kühlen des Induktionselementes und weiter **gekennzeichnet durch** folgende Schritte:
- manuelles oder automatisches Anpassen des flexiblen Induktionselements und der flexiblen Kühlmittelleitung an die Form eines zu erwärmenden Bauteils (15, 32) derart, dass zwischen ihnen und dem zu erwärmenden Bauteil (15, 32) ein Abstand, insbesondere ein Abstand von etwa 10 bis 30 mm, verbleibt, wobei das flexible Induktionselement und die Kühlmittelleitung diese Form während des induktiven Erwärmens des Bauteils selbsttragend beibehalten und wobei das flexible Induktionselement und die Kühlmittelleitung etwa die Hälfte bis zwei Drittel des äußeren Umfangs des Bauteils (15, 32) umgreifen oder an etwa der Hälfte bis zwei Drittel des inneren Umfangs des Bauteils (15, 32) entlanglaufen,
- Erzeugen einer Relativbewegung zwischen Induktionselement und zu erwärmendem Bauteil, insbesondere **durch** Rotation des Bauteils (15, 32) oder des Induktionselementes, und
- Anlegen einer Wechselspannung an das Induktionselement, vorzugsweise einer Wechselspannung mit einer Frequenz von etwa 1 bis 30 kHz, insbesondere von vorzugsweise etwa 1 bis 16 kHz.

11. Verfahren nach Anspruch 10, **dadurch gekennzeichnet, dass** das Bauteil (15, 32) mit einer Aufheizrate von etwa 50 °C bis 100 °C erwärmt wird.

## Claims

1. A device (10, 20, 40) for inductively heating metal components (15, 32) during welding, comprising:
- at least one flexible induction element, and
- means for automatically controlling and regulating the power and if applicable the frequency of a medium-frequency generator (16, 30) connected with the induction element, wherein said means comprise one or a plurality of sensors for, in particular contactless, recording of the temperature of the components (15, 32), and a corresponding control and regulation unit that depending on the temperature acquired by the temperature sensor or sensors operates the medium-frequency generator, (16, 30),
**characterised in that**
- at least one flexible coolant line is provided for a coolant for cooling the induction element,
- the flexible induction element and the coolant line are plastically or elastically deformable multiple times and can manually or automatically be matched to the shape of components (15, 32) to be heated, such that their shape and a distance between them and the components to be heated (15, 32) can be maintained in a self-supporting manner during the operation of the device, and
- the flexible induction element and the coolant line can be adapted to the component (15, 32) to be heated such that they encompass approximately half to two thirds of the outer periphery of the component (15, 32), or can run along approximately half to two thirds of the inner periphery of the component.

2. The device (10, 20, 40) according to claim 1, **characterised in that** the induction element and the coolant line are designed integrally with one another, in particular in the form of an electrically conducting tube (12), through which a cooling fluid can be led during operation of the device.

3. The device (10, 20, 40) according to claim 2, wherein the induction element is designed in the form of an electrically conducting tube (12), **characterised in that** a coil spring (14) is provided in the tube (12), which is located against the inner wall of the tube.

4. The device (10, 20, 40) according to claim 2, wherein the induction element is designed in the form of an electrically conducting tube (12), **characterised in that**, a coil spring (14) is provided, which is located against the outer wall of the tube.

5. The device (10, 20, 40) according to claim 1, **characterised in that** the flexible induction element is designed as an induction plate (22) and the coolant line is designed as a corrugated tube (24) attached to the induction plate (22).

6. The device (10, 20, 40) according to claim 1, **characterised in that** the flexible induction element is formed from an entity of a plurality of plug-in elements (46), and a strand (44) guided by means of the plug-in elements (46).

7. The device (10, 20, 40) according to claim 6, **characterised in that** the strand is a stranded wire of 500 to 2,000, preferably approximately 1,400 to 1,500 individually insulated wires.

8. The device (10, 20, 40) according to claim 1, **characterised in that** the flexible coolant line is formed by means of a plurality of plug-in elements (46).

9. The device (10, 20, 40) according to one of the claims 6 to 8, **characterised in that** the plug-in elements (46) are guided in a preferably sheathed, in particular in a Kevlar-sheathed hose (42), in particular a silicon hose.

10. A method for inductively heating metal components (15, 32), in particular during welding, using a device (10, 20, 40) with a flexible induction element, and **Characterised by** at least one flexible coolant line for a coolant for purposes of cooling the induction element, and further **characterised by** the following steps:
- manually or automatically adapting of the flexible induction element and the coolant line to the shape of a component (15, 32) to be heated, such that a distance remains between them and the component to be heated (15, 32), in particular, a distance of approximately 10 to 30 mm, wherein the flexible induction element and the coolant line maintain this shape during the inductive heating of the component in a self-supporting manner, and wherein the flexible induction element and the coolant line encompass approximately half to two thirds of the outer periphery of the component (15, 32), or run along approximately half to two thirds of the inner periphery of the component (15, 32),
- generating a relative movement between the induction element and the component to be heated, in particular by rotation of the component (15, 32), or of the induction element, and
- applying an alternating voltage onto the induction element, preferably, an alternating voltage with a frequency of approximately 1 to 30 kHz, in particular of preferably approximately 1 to 16 kHz.

11. The method in according to claim 10, **characterised in that** the component (15, 32) is heated with a heating rate of approximately 50°C to 100°C.

## Revendications

1. Dispositif (10, 20, 40) pour le chauffage inductif de composants métalliques (15, 32) lors du soudage, comprenant :
- au moins un élément inductif flexible, et
- des moyens de commande automatique et de réglage de la puissance et, le cas échéant, de la fréquence d'un générateur de fréquences moyennes (16, 30) relié à l'élément inductif, ces moyens comportant un ou plusieurs capteurs destinés à détecter la température des composants (15, 32), en particulier sans contact, ainsi qu'une unité de commande et de réglage correspondante, laquelle actionne le générateur de fréquences moyennes (16, 30) en fonction de la température détectée par le ou les capteur(s) de température,
**caractérisé en ce que**
- il est prévu au moins une conduite de liquide de refroidissement flexible pour un liquide de refroidissement permettant de refroidir l'élément inductif,
- l'élément inductif flexible et la conduite de liquide de refroidissement peuvent être déformés plusieurs fois plastiquement ou élastiquement, et adaptés manuellement ou automatiquement à la forme des composants à chauffer (15, 32), de manière à pouvoir conserver leur forme de façon autoportante et respecter un écart par rapport aux composants à chauffer (15, 32) pendant le fonctionnement du dispositif, et
- l'élément inductif flexible et la conduite de liquide de refroidissement peuvent être adaptés au composant à chauffer (15, 32) de manière à entourer le pourtour extérieur du composant (15, 32) ou à pouvoir s'étendre sur une distance allant de la moitié et deux tiers environ du pourtour intérieur du composant.

2. Dispositif (10, 20, 40) selon la revendication 1, **caractérisé en ce que** l'élément inductif et la conduite de liquide de refroidissement sont formés d'un seul tenant, en particulier sous la forme d'un tuyau électriquement conducteur (12), à travers lequel un liquide de refroidissement peut être guidé pendant le fonctionnement du dispositif.

3. Dispositif (10, 20, 40) selon la revendication 2, dans lequel l'élément inductif est conçu sous la forme d'un tuyau électriquement conducteur (12), **caractérisé en ce qu'**il est prévu un ressort hélicoïdal (14) dans le tuyau (12), lequel s'applique sur la paroi intérieure du tuyau.

4. Dispositif (10, 20, 40) selon la revendication 2, dans lequel l'élément inductif est conçu sous la forme d'un tuyau électriquement conducteur (12), **caractérisé en ce qu'**il est prévu un ressort hélicoïdal (14) dans le tuyau (12), lequel s'applique sur la paroi extérieure du tuyau.

5. Dispositif (10, 20, 40) selon la revendication 1, **caractérisé en ce que** l'élément inductif flexible est conçu comme une plaque à induction (22) et **en ce que** la conduite de liquide de refroidissement est conçue comme un tuyau ondulé (24) fixé sur la plaque à induction (22).

6. Dispositif (10, 20, 40) selon la revendication 1, **caractérisé en ce que** l'élément inductif flexible est formé à partir d'un bloc de plusieurs éléments d'enfichage (46) et d'un cordon (44) guidé à l'aide des éléments d'enfichage (46).

7. Dispositif (10, 20, 40) selon la revendication 6, **caractérisé en ce que** le cordon est un cordon toronné composé de 500 à 2000, de préférence d'environ 1400 à 1500, fils isolés individuels.

8. Dispositif (10, 20, 40) selon la revendication 1, **caractérisé en ce que** la conduite de liquide de refroidissement flexible est formée à l'aide de plusieurs éléments d'enfichage (46).

9. Dispositif (10, 20, 40) selon l'une des revendications 6 à 8, **caractérisé en ce que** les éléments d'enfichage (46) sont guidés dans un tube enrobé (42), en particulier enrobé de Kevlar, en particulier un tube en silicone.

10. Procédé pour le chauffage inductif de composants métalliques (15, 32), en particulier lors du soudage, à l'aide d'un dispositif (10, 20, 40) comprenant un élément inductif flexible et **caractérisé par** une conduite de liquide de refroidissement flexible pour un liquide de refroidissement destiné à refroidir l'élément inductif, et en outre **caractérisé par** les étapes suivantes :
- adaptation manuelle ou automatique de l'élément inductif flexible et de la conduite de liquide de refroidissement flexible à la forme d'un composant à chauffer (15, 32), de manière à conserver un écart par rapport au composant à chauffer (15, 32), en particulier un écart d'environ 10 à 30 mm, l'élément inductif flexible et la conduite de liquide de refroidissement gardant de façon autoportante cette forme pendant le chauffage inductif du composant, et l'élément inductif flexible et la conduite de liquide de refroidissement entourant le pourtour extérieur du composant (15, 32) sur une distance allant de la moitié à deux tiers, ou s'étendant le long du pourtour intérieur du composant sur une distance allant de la moitié à deux tiers,
- création d'un mouvement relatif entre l'élément inductif et le composant à chauffer, en particulier par une rotation du composant (15, 32) ou de l'élément inductif, et
- application d'une tension alternative à l'élément inductif, de préférence une tension alternative avec une fréquence d'environ 1 à 30 kHz, en particulier de préférence d'environ 1 à 16 kHz.

11. Procédé selon la revendication 10, **caractérisé en ce que** le composant (15, 32) est chauffé avec une vitesse de chauffage d'environ 50°C à 100°C.
